# EUROPÄISCHE PATENTSCHRIFT

(11) **EP 2 227 920 B1**
(45) Veröffentlichungstag und Bekanntmachung des Hinweises auf die Patenterteilung: **04.07.2012**
(21) Anmeldenummer: 09778786.5
(22) Anmeldetag: 30.09.2009
(51) Int. Cl.: H04W 16/10

(54) **SELBSTORGANISIERENDES KOMMUNIKATIONSNETZWERK UND VERFAHREN ZU DESSEN BETRIEB**
SELF-ORGANIZING COMMUNICATIONS NETWORK AND METHOD FOR THE OPERATION THEREOF
RÉSEAU DE COMMUNICATION AUTO-ORGANISÉ ET SON PROCÉDÉ DE FONCTIONNEMENT

(30) Priorität: 22.10.2008 DE 102008052718
(43) Veröffentlichungstag der Anmeldung: 15.09.2010
(73) Patentinhaber: Rohde & Schwarz GmbH & Co. KG, 81671 München (DE)
(72) Erfinder: GESSNER, Christina, 81673 München (DE); KOTTKAMP, Meik, 81379 München (DE)
(74) Vertreter: Beder, Jens
(86) Internationale Anmeldenummer: PCT/EP2009/007031
(87) Internationale Veröffentlichungsnummer: WO 2010/046018

(56) Entgegenhaltungen:
- EP-A1- 1 892 971
- US-A1- 2007 115 878
- US-A1- 2007 140 166

## Beschreibung

Die Erfindung betrifft ein Zeitschlitz-Funkkommunikationsnetzwerk und ein Verfahren zum Betrieb eines Zeitschlitz-Funkkommunikationsnetzwerks.

Herkömmlich werden in Funkkommunikationsnetzwerken welche auf Zeitschlitzübertragungsverfahren (TDD - Time-Division-Duplex) sind feste Zuordnungen von Zeitschlitzen zu Sendeschlitzen und Empfangsschlitzen vorab bestimmt. Eine Änderung im Betrieb ist üblicherweise nicht möglich.

An dieser Vorgehensweise ist problematisch, dass bei überwiegendem Sendebedarf oder überwiegendem Empfangsbedarf die Kapazitäten des Funkkommunikationsnetzwerks nicht optimal genutzt werden.

Eine Anpassung der Zuweisung der Zeitschlitze zu Sendeschlitzen und Empfangsschlitzen durch eine einzelne Basisstation wird von der EP 0 948 221 B1 gezeigt. Eine günstigere Nutzung der Kapazitäten ist so möglich. Eine Abstimmung mit benachbarten Basisstationen findet jedoch nicht statt. Eine Optimierung für eine Basisstation verursacht bei benachbarten Basisstationen starke Störungen und eine Verringerung der Übertragungsleistung. Bei einer Neuaktivierung von Basisstationen ist hier ein hoher Aufwand zur Kalibrierung notwendig.

Andere Beispiele sind aus US 2007/115878 und EP 1892971 bekannt.

Der Erfindung liegt die Aufgabe zu Grunde, ein Funkkommunikationsnetzwerk und ein Verfahren zum Betrieb eines Funkkommunikationsnetzwerks zu schaffen, welche die Netzwerkkapazitäten zu einem hohen Grad ausnutzen, geringen Aufwand zur Inbetriebnahme und Wartung erfordern und störungsarme Nachrichtenübertragung gewährleisten.

Die Aufgabe wird erfindungsgemäß für die Vorrichtung durch die Merkmale des unabhängigen Anspruchs 1 und für das Verfahren durch die Merkmale des unabhängigen Anspruchs 10 gelöst. Vorteilhafte Weiterbildungen sind Gegenstand der hierauf rückbezogenen Unteransprüche.

Ein erfindungsgemäßes Funkkommunikationsnetzwerk verfügt über zumindest zwei Basisstationen. Die Basisstationen kommunizieren in Zeitschlitzen mit Mobilstationen. Die Zeitschlitze sind in Sendeschlitze, während welchen die Basisstationen Nachrichten senden und Empfangsschlitze, während welchen die Basisstationen Nachrichten empfangen, aufgeteilt. Die Basisstationen bestimmen eine Zuweisung der Zeitschlitze zu Sendeschlitzen und Empfangsschlitzen gemeinsam. So ist eine für das gesamte Netzwerk günstige Verteilung der Zeitschlitze gewährleistet. Eine Erhöhung der Menge der übertragenen Nachrichten ist so möglich und die Anforderungen sämtlicher Basisstationen im Netz können berücksichtigt werden.

Eine erste Basisstation sendet einer zweiten Basisstation bevorzugt einen Vorschlag der Zuweisung der Zeitschlitze zu Sendeschlitzen und Empfangsschlitzen. Die zweite Basisstation akzeptiert bevorzugt den Vorschlag und sendet bevorzugt der ersten Basisstation eine Bestätigung. Alternativ lehnt die zweite Basisstation den Vorschlag ab und sendet bevorzugt der ersten Basisstation eine Ablehnung. So ist eine schnelle Bestimmung der Zuweisung möglich.

Die zweite Basisstation sendet vorteilhafterweise der ersten Basisstation einen zweiten Vorschlag der Zuweisung der Zeitschlitze zu Sendeschlitzen und Empfangsschlitzen. So ist eine schnelle Bestimmung der Zuweisung unter Aufrechterhaltung einer hohen gesamten Nachrichtenübertragung möglich.

Zumindest eine Basisstation verfügt bevorzugt über eine höhere Priorität verfügt als zumindest eine andere Basisstation oder noch bevorzugt alle anderen Basisstationen. Ein Vorschlag der Zuweisung der Zeitschlitze zu Sendeschlitzen und Empfangsschlitzen durch die Basisstation höherer Priorität wird bevorzugt von einer Basisstation niedrigerer Priorität stets akzeptiert. So können Nachrichten bevorzugter Teilnehmer mit erhöhter Zuverlässigkeit und reduzierter Verzögerung übertragen werden. Insbesondere kann die Basisstation höherer Priorität als Ausgangspunkt der gemeinsamen Abstimmung eingesetzt werden.

Die Basisstationen bestimmen bevorzugt ihre Vorschläge der Zuweisung der Zeitschlitze zu Sendeschlitzen und Empfangsschlitzen abhängig von einem jeweiligen Nachrichtenübertragungsbedarf. So kann die gesamte Übertragungsrate des Funkkommunikationsnetzes erhöht werden.

Die Basisstationen sind bevorzugt über eine Funkverbindung und/oder eine Verbindungsleitung miteinander verbunden. Die Basisstationen kommunizieren bevorzugt über diese Funkverbindung und/oder diese Verbindungsleitung. So kann eine Kommunikation der Basisstationen flexibel aufrechterhalten werden. Darüber hinaus ist insbesondere durch eine Verbindungsleitung eine zuverlässige Kommunikation unabhängig von dem Funkkommunikationsnetzwerk möglich.

Die Basisstationen tauschen bevorzugt zusätzlich Synchronisationsinformationen aus. Die Basisstationen synchronisieren bevorzugt die Sendeschlitze und Empfangsschlitze. So ist eine weitere Reduktion der Störungen und damit eine Erhöhung der Übertragungsrate des Funkkommunikationsnetzes möglich.

Vorteilhafterweise weisen die Basisstationen die Zeitschlitze derart Sendeschlitzen und Empfangsschlitzen zu, dass die Anzahl nicht zur Übertragung von Nachrichten genutzter Zeitschlitze minimiert ist. So ist eine Optimierung der Anzahl der mittels des Funkkommunikationsnetzes übertragenen Nachrichten möglich.

Die Basisstationen bestimmen bevorzugt nach einer Aktivierung einer weiteren Basisstation gemeinsam mit der weiteren Basisstation eine Zuweisung der Zeitschlitze zu Sendeschlitzen und Empfangsschlitzen. So sind eine Selbstorganisation und eine Selbstheilung des Funkkommunikationsnetzwerks möglich.

Nachfolgend wird die Erfindung anhand der Zeichnung, in der ein vorteilhaftes Ausführungsbeispiel der Erfindung dargestellt ist, beispielhaft beschrieben. In der Zeichnung zeigen:
- Fig. 1: ein erstes Ausführungsbeispiel des erfindungsgemäßen Funkkommunikationsnetzwerks;
- Fig. 2: ein zweites Ausführungsbeispiel des erfindungsgemäßen Funkkommunikationsnetzwerks;
- Fig. 3: eine erste erfindungsgemäße Zuweisung von Zeitschlitzen;
- Fig. 4: eine zweite erfindungsgemäße Zuweisung von Zeitschlitzen;
- Fig. 5: eine dritte erfindungsgemäße Zuweisung von Zeitschlitzen;
- Fig. 6: ein erstes Ausführungsbeispiel des erfindungsgemäßen Verfahrens in einem Ablaufdiagramm;
- Fig. 7: ein zweites Ausführungsbeispiel des erfindungsgemäßen Verfahrens in einem Ablaufdiagramm;
- Fig. 8: ein drittes Ausführungsbeispiel des erfindungsgemäßen Verfahrens in einem Diagramm des Kommunikationsablaufs;
- Fig. 9: ein viertes Ausführungsbeispiel des erfindungsgemäßen Verfahrens in einem Diagramm des Kommunikationsablaufs;
- Fig. 10: ein fünftes Ausführungsbeispiel des erfindungsgemäßen Verfahrens in einem Diagramm des Kommunikationsablaufs;
- Fig. 11: eine erste beispielhafte Zuweisung von Zeitschlitzen, und
- Fig. 12: ein sechstes Ausführungsbeispiel des erfindungsgemäßen Verfahrens in einem Ablaufdiagramm.

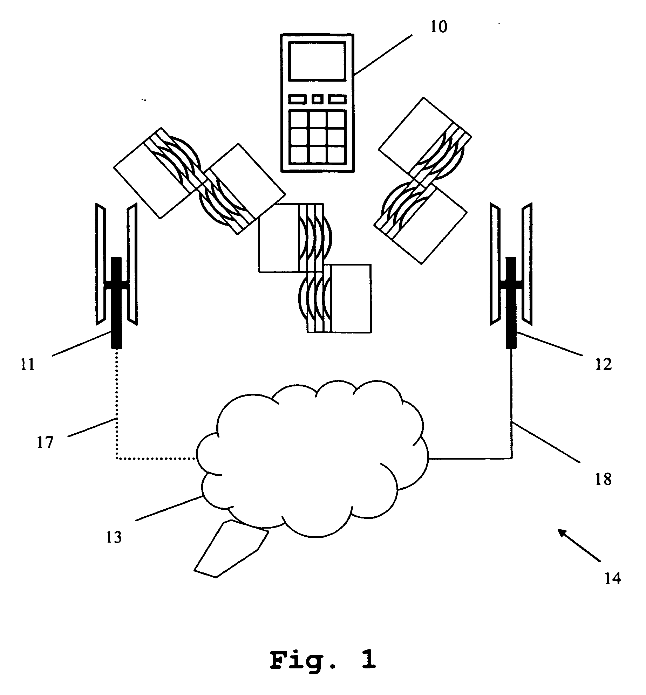

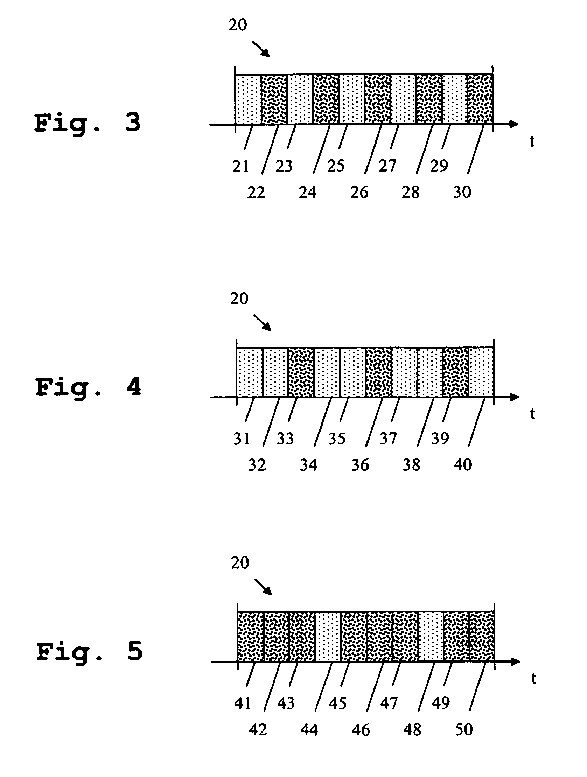

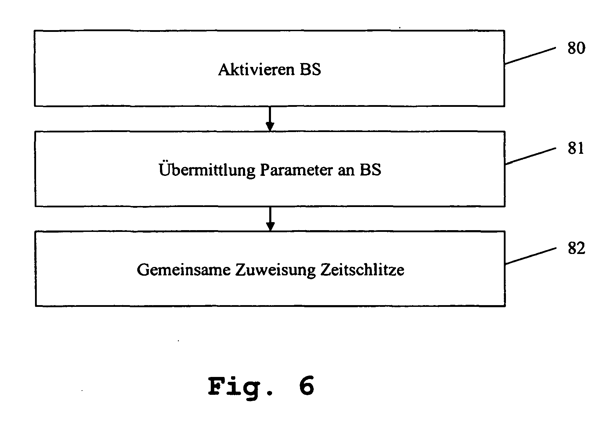

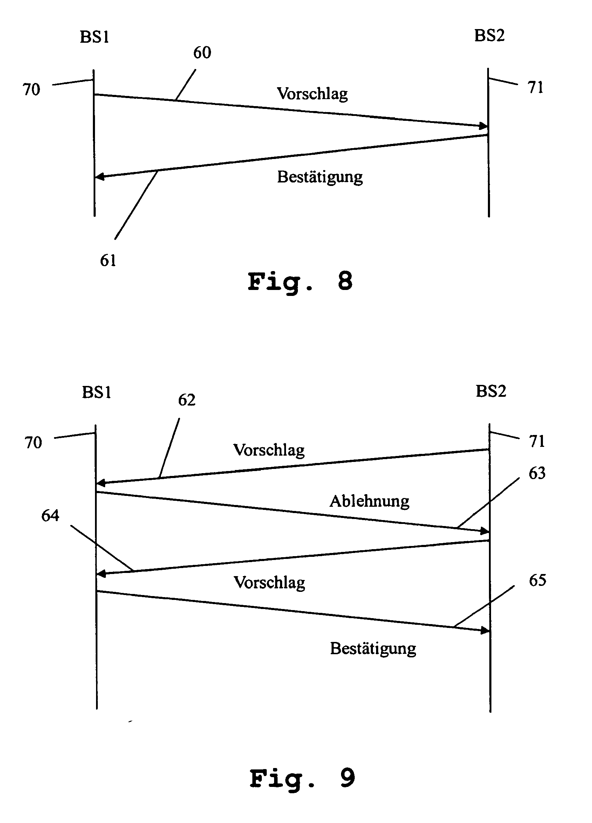

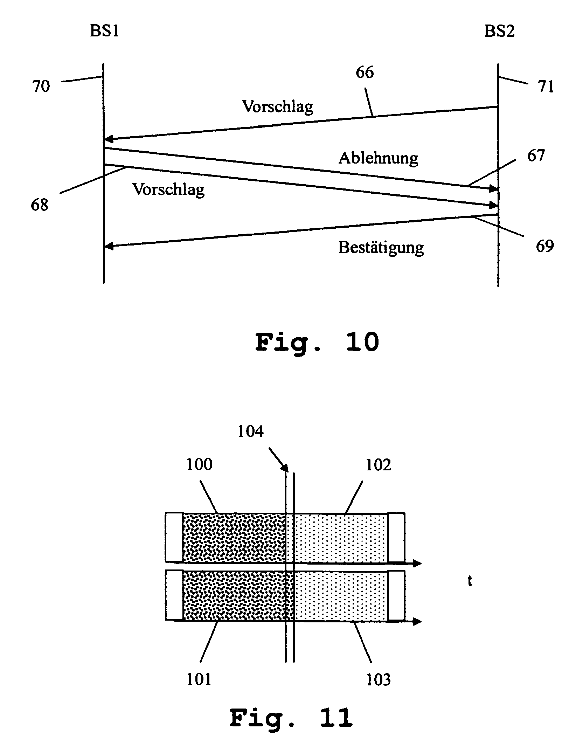

Zunächst wird anhand der Fig. 1 - 2 der Aufbau und die generelle Funktionsweise des erfindungsgemäßen Funkkommunikationsnetzwerks erläutert. Mittels Fig. 3 - 5 wird anhand von unterschiedlichen Zuweisungen von Zeitschlitzen Details des erfindungsgemäßen Funkkommunikationsnetzwerks und des erfindungsgemäßen Verfahrens dargestellt. Mittels Fig. 6 - 7 wird anschließend das erfindungsgemäße Verfahren anhand von zwei Ausführungsbeispielen näher erläutert. Anhand der Fig. 8 - 10 wird anschließend die Funktionsweise verschiedener Ausführungsbeispiele des erfindungsgemäßen Verfahrens weiter an Kommunikationsbeispielen verdeutlicht. Zuletzt wird anhand der Fig. 11 - 12 die Synchronisierung näher betrachtet. Identische Elemente wurden in ähnlichen Abbildungen zum Teil nicht wiederholt dargestellt und beschrieben.

In Fig. 1 wird ein erstes Ausführungsbeispiel des erfindungsgemäßen Funkkommunikationsnetzwerks dargestellt. Ein Funkkommunikationsnetzwerk 14 beinhaltet zwei Basisstationen 11, 12 und ein Netzwerk 13. Das Netzwerk 13 ist dabei mittels einer drahtlosen Verbindung 17 mit der ersten Basisstation 11 verbunden und kann weitere nicht dargestellte Basisstationen enthalten. Mittels einer Verbindungsleitung 18 ist das Netzwerk 13 mit der zweiten Basisstation 12 verbunden. Eine Mobilstation 10 steht in Funkkontakt zu dem Funkkommunikationsnetzwerk 14. Die beiden Basisstationen 11, 12 weisen in diesem Ausführungsbeispiel eine Sichtverbindung zueinander auf. Die Basisstationen 11, 12 senden weitgehend identische Signale in einem gemeinsamen Frequenzbereich aus. Sämtliche Mobilstationen 10 teilen sich diesen Frequenzbereich. Über z.B. ein Codemultiplexverfahren können die Signale der einzelnen Mobilstationen getrennt werden.

Das Funkkommunikationsnetzwerk setzt ein Zeitschlitzverfahren ein. D.h. im Zeitbereich werden Signale, welche von den Basisstationen 11, 12 gesendet werden von Signalen getrennt, welche von den Basisstationen 11, 12 empfangen werden. Ein bestimmter Zeitabschnitt (frame) wird in eine festgelegte Anzahl von Zeitschlitzen (slot) unterteilt. Jeder Zeitschlitz weist dabei die gleiche Länge auf. Jeder Zeitschlitz dient entweder dem Senden von Nachrichten durch die Basisstationen 11, 12 oder dem Empfangen von Nachrichten durch die Basisstationen 11, 12. Die von den Basisstationen 11, 12 empfangenen Nachrichten werden von den Mobilstationen 10 gesendet. Jeder Zeitschlitz ist somit entweder ein Sendeschlitz oder ein Empfangsschlitz. Bei dieser Betrachtung wird von Seite der Basisstationen 11, 12 ausgegangen. Jeder Zeitschlitz verfügt dabei über eine identische Dauer. Somit kann über jeden Zeitschlitz bei einheitlichem Übertragungsstandard eine identische Menge an Nachrichten übertragen werden. Üblicherweise wird eine feste Verteilung von Sendeschlitzen und Empfangsschlitzen eingesetzt. Dies führt jedoch zu einer reduzierten Effizienz, da eine Ausnutzung der Kapazitäten sämtlicher Zeitschlitze nicht gewährleistet ist. Erfindungsgemäß wird eine variable Zuweisung der Zeitschlitze zu Sendeschlitzen und Empfangsschlitzen eingesetzt. Die Basisstationen 11, 12 weisen gemeinsam den Zeitschlitzen Sendeschlitze und Empfangsschlitze zu.

Auf unterschiedliche Verteilungen von Zeitschlitzen in Abhängigkeit von Übertragungsanforderungen der Basisstationen 11, 12 wird anhand der Fig. 3 - 5 näher eingegangen.

Auf die Funktion der gemeinsamen Zuweisung wird anhand der Fig. 6 - 10 näher eingegangen.

Problematisch ist weiterhin die Synchronisierung der Zeitschlitze der unterschiedlichen Basisstationen 11, 12. Auf Grund von Ungenauigkeiten der Systemuhren und auf Grund von Latenzen der Synchronisierungssignalisierung über das Netzwerk 13 ergibt sich eine unvollkommene Synchronisierung der Basisstationen 11, 12. Dies ist auf Grund der Sichtverbindung der beiden Basisstationen 11, 12 insbesondere in diesem Ausführungsbeispiel problematisch. Eine unvollkommene Synchronisierung führt hier zu einer direkten Einstrahlung des in den Empfangsschlitz der z.B. ersten Basisstation 11 zeitlich hineinragenden Sendeschlitzes der z.B. zweiten Basisstation 12. Dies führt zu einem sehr niedrigen Signal-Rausch-Verhältnis und damit zu einer hohen Bitfehlerrate während der Überlappungsdauer. Insbesondere in dem Fall der Sichtverbindung der Basisstationen ist somit eine möglichst genaue Synchronisierung von hoher Bedeutung.

Die Synchronisierung wird hergestellt, indem die Basisstationen die Güte der gegenwärtigen Synchronisierung ermitteln und gemeinsame Zeiträume der Zeitschlitze bestimmen.

So bestimmt z.B. die erste Basisstation 11 eine fehlerhafte Synchronisierung von 3ms durch Ermittlung einer sehr hohen Bitfehlerrate in den ersten 3ms nach einem Zeitschlitzbeginn. Die erste Basisstation 11 sendet der zweiten Basisstation 12 daraufhin einen Vorschlag der Zuweisung der Zeitschlitze zu Sendeschlitzen und Empfangsschlitzen. Diese Zuweisung beinhaltet genaue Angaben der Zeiträume der Zeitschlitze. Die zweite Basisstation 12 akzeptiert diesen Vorschlag und sendet eine Bestätigung zurück. Falls die Synchronisierung noch nicht optimal eingestellt ist, wird der Vorgang wiederholt. Die zweite Basisstation 12 könnte den Vorschlag auch basierend auf eigenen einer selbst gemessenen Güte der Synchronisierung modifizieren und als neuen Vorschlag an die erste Basisstation 11 zurücksenden. Der Vorgang der Synchronisierung wird regelmäßig wiederholt. Zusätzlich wird er angestoßen, wenn eine hohe Bitfehlerrate bestimmt wird.

Der Ablauf und die Funktion der Synchronisierung werden anhand von Fig. 11 - 12 näher erläutert.

Wird einem bestehenden Funkkommunikationsnetzwerk 14 eine weitere Basisstation hinzugefügt, so bestimmt diese gemeinsam mit den bestehenden Basisstationen 11, 12 eine Zuweisung der Zeitschlitze. Somit findet auch eine Synchronisierung statt. Das Funkkommunikationsnetzwerk 14 führt somit eine Selbstkonfiguration der neuen Basisstation durch. Reißt die Verbindung zu einer Basisstation 11, 12 ab, welche bereits Teil des Funkkommunikationsnetzwerks 14 war, so wird zur Selbstheilung wie bei einer neuen Basisstation vorgegangen.

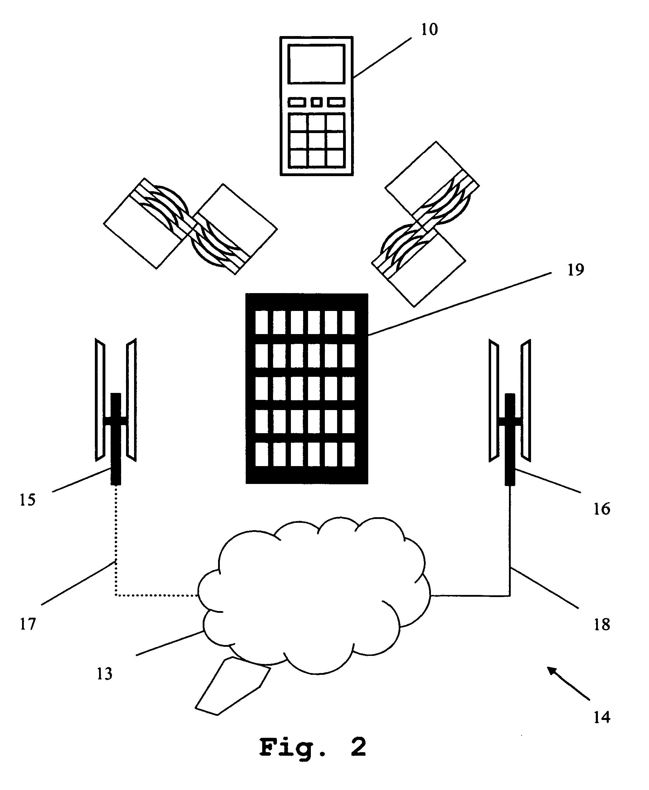

Fig. 2 zeigt ein zweites Ausführungsbeispiel des erfindungsgemäßen Funkkommunikationsnetzwerks. Das Ausführungsbeispiel ist weitgehend dem in Fig. 1 dargestellten Ausführungsbeispiel identisch. Die Basisstationen 15, 16 entsprechen den Basisstationen 11, 12 aus Fig. 1. Die Basisstationen 15, 16 weisen jedoch keine direkte Sichtverbindung auf. Die Sichtverbindung wird durch ein Gebäude 19 blockiert. Damit können die Basisstationen 15, 16 keine genauen Synchronisierungsmessungen durchführen, da ein direkter Ausbreitungspfad nicht besteht. Stattdessen wird eine Mehrzahl an Ausbreitungspfaden ermittelt. Eine sehr genaue Synchronisierung der Zeitschlitze ist in diesem Ausführungsbeispiel jedoch von geringerer Bedeutung, da eine Überlappung der Sendeschlitze und Empfangsschlitze der Basisstationen 15, 16 nur einen geringeren Effekt erzielt. Darüber hinaus wird durch die Mehrwegeausbreitung ein ähnlicher Stör-Effekt ausgelöst.

In Fig. 3 wird eine erste erfindungsgemäße Zuweisung von Zeitschlitzen 20 dargestellt. Dabei ist die Hälfte der Zeitschlitze 20 Sendeschlitzen 21, 23, 25, 27, 29 zugewiesen. Die andere Hälfte der Zeitschlitze 20 ist Empfangsschlitzen 22, 24, 26, 28, 30 zugewiesen. Diese Zuweisung wird durch die Basisstationen in Abhängigkeit von ihrem jeweiligen Nachrichtenübertragungsbedarf gemeinsam bestimmt. Auf dieses Verfahren wird anhand der Fig. 6 - Fig. 10 eingegangen. Eine hier dargestellte Zuweisung wird von den Basisstationen gewählt, wenn der Bedarf der Basisstationen Nachrichten zu senden ähnlich groß ist, wie der Bedarf der Basisstationen Nachrichten zu empfangen, d.h. wie der Bedarf von Mobilstationen Nachrichten zu senden.

Fig. 4 zeigt eine zweite erfindungsgemäße Zuweisung von Zeitschlitzen 20. Dabei überwiegen bei diesem Ausführungsbeispiel die Sendeschlitze 31, 32, 34, 35, 37, 38, 40 gegenüber den Empfangsschlitzen 33, 36, 39. Ein erhöhter Sendebedarf der Basisstationen ist hierfür ursächlich.

In Fig. 5 wird eine dritte erfindungsgemäße Zuweisung von Zeitschlitzen 20 dargestellt. Dabei überwiegen bei diesem Ausführungsbeispiel die Empfangsschlitze 41, 42, 43, 45, 46, 47, 49, 50 gegenüber den Sendeschlitzen 44, 48. Ein erhöhter Empfangsbedarf der Basisstationen ist hierfür ursächlich.

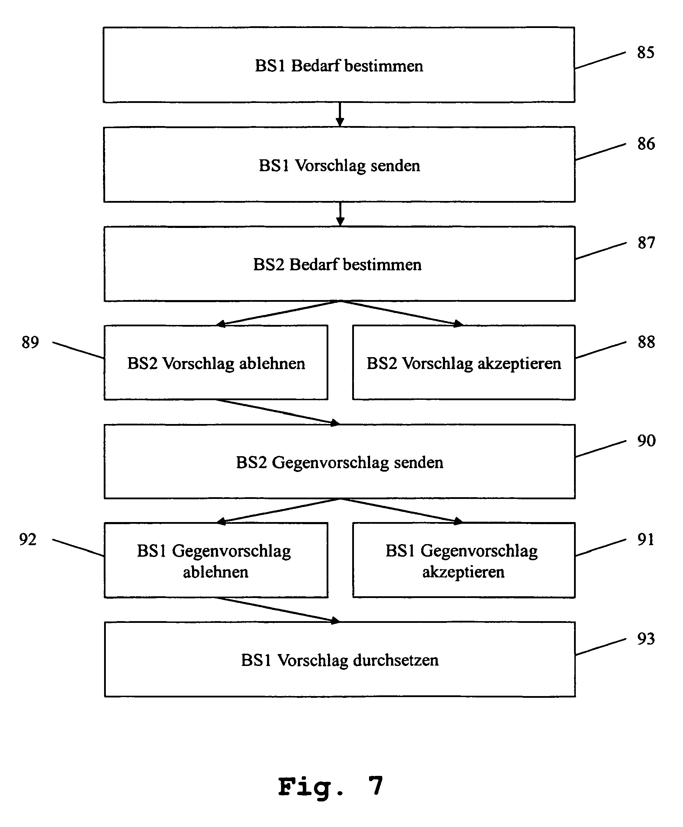

Fig. 6 zeigt ein erstes Ausführungsbeispiel des erfindungsgemäßen Verfahrens in einem Ablaufdiagramm. Bei der Aktivierung einer neuen Basisstation oder der Reaktivierung einer zeitweise außer Betrieb gesetzten Basisstation wird zunächst in einem ersten Schritt 80 die Basisstation aktiviert. In einem zweiten Schritt 81 werden Kommunikationsparameter wie die eingesetzten Modulations- und Codierungsverfahren über das Netzwerk 13 aus Fig. 1 und Fig. 2 an die neu aktivierte Basisstation gesendet. Die neu aktivierte Basisstation und die bereits aktivierten Basisstationen bestimmen in einem dritten Schritt 82 gemeinsam die Zuweisung von Zeitschlitzen zu Sendeschlitzen und Empfangsschlitzen basierend auf ihren jeweiligen Nachrichtenübertragungsanforderungen. Auf den Ablauf dieser Zuweisungsbestimmung wird anhand von Fig. 7 im Folgenden näher eingegangen.

In Fig. 7 wird ein zweites Ausführungsbeispiel des erfindungsgemäßen Verfahrens in einem Ablaufdiagramm gezeigt. Das hier gezeigte Verfahren wird sowohl bei Neuaktivierung einer Basisstation wie in Fig. 6 gezeigt wie auch in bestehenden Funkkommunikationsnetzen eingesetzt. In bestehenden Funkkommunikationsnetzen wird es in regelmäßigen Intervallen angestoßen um eine Optimierung durchzuführen. Darüber hinaus wird es zur Störungsbeseitigung eingesetzt.

In einem ersten Schritt 85 wird der Nachrichtenübermittlungsbedarf einer ersten Basisstation bestimmt. Dies beinhaltet sowohl ihren Sendebedarf als auch ihren Empfangsbedarf, d.h. den Sendebedarf der mit ihr kommunizierenden Mobilstationen. In einem zweiten Schritt 86 wird von der ersten Basisstation ein Vorschlag der Zuweisung der Zeitschlitze zu Sendeschlitzen und Empfangsschlitzen basierend auf ihrem Nachrichtenübermittlungsbedarf bestimmt und an eine zweite Basisstation gesendet. Die zweite Basisstation bestimmt in einem dritten Schritt 87 nach dem Empfang des Vorschlags ihren eigenen Nachrichtenübermittlungsbedarf. Stimmt der eigene Nachrichtenübermittlungsbedarf der zweiten Basisstation ausreichend mit dem Vorschlag der ersten Basisstation überein, so wird der Vorschlag in einem vierten Schritt 88 von der zweiten Basisstation akzeptiert und eine entsprechende Nachricht an die erste Basisstation gesendet. Die Bestimmung der Zuweisung ist in diesem Fall abgeschlossen. Die neue Zuweisung wird ab einem in dem Vorschlag enthaltenen Zeitpunkt eingesetzt.

Stimmen der Nachrichtenübermittlungsbedarf und der Vorschlag nicht hinreichend überein, lehnt die zweite Basisstation den Vorschlag in einem alternativen vierten Schritt 89 ab und sendet eine entsprechende Nachricht an die erste Basisstation. In einem fünften Schritt 90 wird von der zweiten Basisstation ein Gegenvorschlag an die erste Basisstation gesendet. Der Gegenvorschlag basiert auf dem Nachrichtenübermittlungsbedarf der zweiten Basisstation. Der Gegenvorschlag berücksichtigt dabei den Vorschlag der ersten Basisstation und stellt einen Kompromiss zwischen diesen beiden Zuweisungen dar. Stimmen der Nachrichtenübermittlungsbedarf der ersten Basisstation und der Gegenvorschlag hinreichend überein, so akzeptiert die erste Basisstation in einem sechsten Schritt 91 den Gegenvorschlag und sendet eine entsprechende Nachricht an die zweite Basisstation. Die Bestimmung der Zuweisung ist in diesem Fall abgeschlossen. Die neue Zuweisung wird ab einem in dem Gegenvorschlag enthaltenen Zeitpunkt eingesetzt.

Stimmen der Nachrichtenübermittlungsbedarf und der Gegenvorschlag nicht hinreichend überein, lehnt die erste Basisstation den Vorschlag in einem alternativen sechsten Schritt 92 ab und sendet eine entsprechende Nachricht an die erste Basisstation. Die erste Basisstation verfügt in diesem Ausführungsbeispiel über eine höhere Priorität als die zweite Basisstation. In einem siebten Schritt 93 sendet die erste Basisstation einen erneuten Vorschlag an die zweite Basisstation. Auf Grund der höheren Priorität der ersten Basisstation setzt sie diesen Vorschlag durch. Die zweite Basisstation akzeptiert diesen Vorschlag. Die Bestimmung der Zuweisung ist in diesem Fall abgeschlossen. Die neue Zuweisung wird ab einem in dem durchgesetzten Vorschlag enthaltenen Zeitpunkt eingesetzt.

Alternativ zu dem Durchsetzen des Vorschlags könnten weitere Wiederholungen des gegenseitigen Zusendens von Vorschlägen erfolgen. Dies erfordert jedoch eine lange Zeit und bindet unnötig Systemressourcen wie auch Übertragungsbandbreite.

Fig. 8 zeigt ein drittes Ausführungsbeispiel des erfindungsgemäßen Verfahrens in einem Diagramm des Kommunikationsablaufs. Eine erste Basisstation 70 sendet einen Vorschlag 60 der Zuweisung der Zeitschlitze an eine zweite Basisstation 71. Der Vorschlag 60 basiert dabei auf dem Nachrichtenübermittlungsbedarf der ersten Basisstation 70 bzw. von mit dieser Basisstation 70 kommunizierenden Mobilstationen. Die zweite Basisstation 71 ist mit diesem Vorschlag einverstanden und sendet eine Bestätigung 61 an die erste Basisstation 70. Zu einem in dem Vorschlag 60 festgelegten Zeitpunkt wird die neue Zuweisung der Zeitschlitze ausgeführt.

In Fig. 9 wird ein viertes Ausführungsbeispiel des erfindungsgemäßen Verfahrens in einem Diagramm des Kommunikationsablaufs dargestellt. Hier sendet die zweite Basisstation 71 einen Vorschlag 62 der Zuweisung der Zeitschlitze an die erste Basisstation 70. Der Nachrichtenübertragungsbedarf der ersten Basisstation 70 weicht jedoch deutlich von dem Bedarf der zweiten Basisstation 71 ab. Deshalb sendet die erste Basisstation 70 eine Ablehnung 63 an die zweite Basisstation 71. Die zweite Basisstation passt ihren Vorschlag 62 zumindest teilweise an den Bedarf der ersten Basisstation an, und sendet einen zweiten Vorschlag 64 der Zuweisung der Zeitschlitze an die erste Basisstation 70. Dieser zweite Vorschlag 64 erfüllt den Nachrichtenübertragungsbedarf der ersten Basisstation 71 ausreichend gut. Die erste Basisstation 70 sendet daraufhin der zweiten Basisstation 71 eine Bestätigung. Auch hier wird zu einem in dem Vorschlag 64 festgelegten Zeitpunkt die neue Zuweisung der Zeitschlitze ausgeführt.

Die Basisstationen 70, 71 weisen dabei unterschiedliche Prioritäten auf. Kann keine Einigung der Basisstationen 70, 71 auf eine Zuweisung der Zeitschlitze erreicht werden, so kann eine Basisstation höherer Priorität einen Vorschlag entgegen dem Nachrichtenübermittlungsbedarf einer Basisstation geringerer Priorität durchsetzen. Alternativ ist die Berücksichtigung einer Priorität mit den jeweiligen Basisstationen kommunizierender Mobilstationen oder individueller Kommunikationsereignisse möglich. So weist jede Mobilstation bzw. jedes Kommunikationsereignis, z.B. Anruf, Datenübertragung, etc. eine Priorität auf. Diese Priorität wird von der jeweiligen Basisstation übernommen.

Fig. 10 zeigt ein fünftes Ausführungsbeispiel des erfindungsgemäßen Verfahrens in einem Diagramm des Kommunikationsablaufs. Hier sendet die zweite Basisstation 71 zunächst einen Vorschlag 66 der Zuweisung der Zeitschlitze an die erste Basisstation 70. Die erste Basisstation 70 sendet eine Ablehnung 67 zurück an die zweite Basisstation 71. Noch bevor sie einen weiteren Vorschlag durch die zweite Basisstation 70 abwartet sendet sie einen Gegenvorschlag 68 an die zweite Basisstation 71. Die zweite Basisstation 71 ist mit diesem Vorschlag 68 einverstanden und sendet eine Bestätigung 69 an die erste Basisstation 70. Dieses abgewandelte Verfahren verkürzt die Dauer der gemeinsamen Bestimmung der Zuweisung der Zeitschlitze.

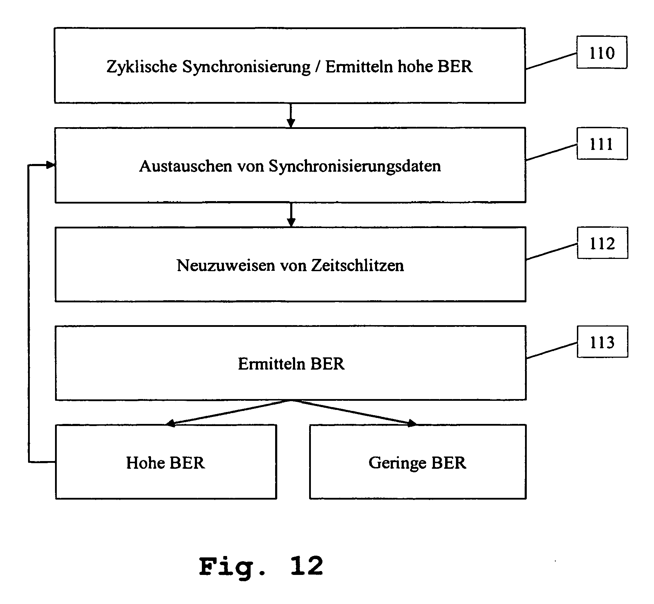

In Fig. 11 wird eine erste beispielhafte Zuweisung von Zeitschlitzen zweier Basisstationen dargestellt. Der Übergang von einem Empfangsschlitz 100 zu einem Sendeschlitz 102 einer ersten Basisstation ist in dem oberen Teildiagramm gezeigt. Der Übergang von einem Empfangsschlitz 101 zu einem Sendeschlitz 103 einer zweiten Basisstation ist in dem unteren Teildiagramm gezeigt. Die Zeitschlitze 100, 101, 102, 103 der beiden Basisstationen sind jedoch nicht optimal synchronisiert. Der Übergang der Empfangsschlitze 100, 101 zu den Sendeschlitzen 102, 103 ist um ein Intervall 104 versetzt. Während dieses Intervalls 104 treten große Störungen auf. Eine hohe Bitfehlerwahrscheinlichkeit ist die Folge. Diese hohe Bitfehlerwahrscheinlichkeit kann gemessen werden. Ein Synchronisierungsvorgang wird angestoßen. Dies wird im Folgenden anhand der Fig. 12 näher erläutert.

Fig. 12 zeigt ein sechstes Ausführungsbeispiel des erfindungsgemäßen Verfahrens in einem Ablaufdiagramm. In einem ersten Schritt 110 wird die Synchronisierung angestoßen. Dies kann entweder in regelmäßigen Abständen automatisch geschehen um die Übertragung zu optimieren oder durch die Messung einer hohen Bitfehlerwahrscheinlichkeit (BER) ausgelöst werden. In einem zweiten Schritt 111 tauschen die Basisstationen Synchronisationsdaten aus. Dies kann entweder über eine Verbindungsleitung oder über eine Funkverbindung erfolgen. Auch ein Austausch über speziell für diesen Zweck zugewiesene Zeitschlitze ist möglich. Die Synchronisationsdaten enthalten die von der jeweiligen Basisstation gemessene Güte der Synchronisation. In einem dritten Schritt 112 werden die Zeitschlitze gemeinsam durch die Basisstationen neu zugewiesen. Dabei werden die Synchronisationsdaten mitberücksichtigt. Die gemeinsame Zuweisung der Zeitschlitze ist anhand der Fig. 7 im Detail beschrieben. In einem vierten Schritt 113 wird erneut die Bitfehlerrate bestimmt. Wird eine geringe Bitfehlerrate festgestellt, wird der Synchronisationsvorgang beendet. Wird eine hohe Bitfehlerrate festgestellt, wird der Synchronisationsvorgang ab dem zweiten Schritt 111 wiederholt. Eine solche Wiederholung findet nicht beliebig häufig statt. Ab einer bestimmten Anzahl an Wiederholungen wird die zur erfolgreichen Synchronisierung nicht zu überschreitende Schwelle der Bitfehlerrate angehoben.

Die Erfindung ist nicht auf das dargestellte Ausführungsbeispiel beschränkt. Wie bereits erwähnt, können unterschiedliche Kommunikationsstandards eingesetzt werden. Auch eine auf komplexeren Regeln basierende gemeinsame Festlegung der Zuweisung der Zeitschlitze ist möglich. Alle vorstehend beschriebenen Merkmale oder in den Figuren gezeigten Merkmale sind im Rahmen der Erfindung beliebig vorteilhaft miteinander kombinierbar.

## Patentansprüche

1. Funkkommunikationsnetzwerk mit zumindest zwei Basisstationen (11, 12, 15, 16, 70, 71),
wobei die Basisstationen (11, 12, 15, 16, 70, 71) in Zeitschlitzen (20) mit Mobilstationen (10) kommunizieren, wobei die Zeitschlitze (20) in Sendeschlitze (21, 23, 25, 27, 29, 31, 32, 34, 35, 37, 38, 40, 44, 48, 102, 103), während welchen die Basisstationen (11, 12, 15, 16, 70, 71) Nachrichten senden und Empfangsschlitze (22, 24, 26, 28, 30, 33, 36, 39, 41, 42, 43, 45, 46, 47, 49, 50, 100, 101), während welchen die Basisstationen (11, 12, 15, 16, 70, 71) Nachrichten empfangen, aufgeteilt sind,
wobei die Basisstationen (11, 12, 15, 16, 70, 71) so eingerichtet sind, dass sie eine Zuweisung der Zeitschlitze (20) zu Sendeschlitzen (21, 23, 25, 27, 29, 31, 32, 34, 35, 37, 38, 40, 44, 48, 102, 103) und Empfangsschlitzen (22, 24, 26, 28, 30, 33, 36, 39, 41, 42, 43, 45, 46, 47, 49, 50, 100, 101) gemeinsam bestimmen,
**dadurch gekennzeichnet,**
**dass** eine erste Basisstation (11, 12, 15, 16, 70, 71) so eingerichtet ist, dass sie einer zweiten Basisstation (11, 12, 15, 16, 70, 71) einen Vorschlag (60, 62, 64, 66, 68) der Zuweisung der Zeitschlitze (20) zu Sendeschlitzen (21, 23, 25, 27, 29, 31, 32, 34, 35, 37, 38, 40, 44, 48, 102, 103) und Empfangsschlitzen (22, 24, 26, 28, 30, 33, 36, 39, 41, 42, 43, 45, 46, 47, 49, 50, 100, 101) sendet, und dass die zweite Basisstation (11, 12, 15, 16, 70, 71) so eingerichtet ist, dass sie, wenn sie den Vorschlag (60, 62, 64, 66, 68) akzeptiert, der ersten Basisstation (11, 12, 15, 16, 70, 71) eine Bestätigung (61, 65, 69) sendet, oder wenn sie den Vorschlag (60, 62, 64, 66, 68) ablehnt, der ersten Basisstation (11, 12, 15, 16, 70, 71) eine Ablehnung (63, 67) sendet.

2. Funkkommunikationsnetzwerk nach Anspruch 1,
**dadurch gekennzeichnet,**
**dass** die zweite Basisstation (11, 12, 15, 16, 70, 71) so eingerichtet ist, dass sie der ersten Basisstation (11, 12, 15, 16, 70, 71) einen zweiten Vorschlag (64, 68) der Zuweisung der Zeitschlitze (20) zu Sendeschlitzen (21, 23, 25, 27, 29, 31, 32, 34, 35, 37, 38, 40, 44, 48, 102, 103) und Empfangsschlitzen (22, 24, 26, 28, 30, 33, 36, 39, 41, 42, 43, 45, 46, 47, 49, 50, 100, 101) sendet.

3. Funkkommunikationsnetzwerk nach einem der Ansprüche 1 oder 2,
**dadurch gekennzeichnet,**
**dass** zumindest eine Basisstation (11, 12, 15, 16, 70, 71) eine höhere Priorität aufweist als zumindest eine andere Basisstation (11, 12, 15, 16, 70, 71), und
**dass** die Basisstation niedriger Priorität so eingerichtet ist, dass ein Vorschlag (60, 62, 64, 66, 68) der Zuweisung der Zeitschlitze (20) zu Sendeschlitzen (21, 23, 25, 27, 29, 31, 32, 34, 35, 37, 38, 40, 44, 48, 102, 103) und Empfangsschlitzen (22, 24, 26, 28, 30, 33, 36, 39, 41, 42, 43, 45, 46, 47, 49, 50, 100, 101) durch die Basisstation (11, 12, 15, 16, 70, 71) höherer Priorität von der Basisstation (11, 12, 15, 16, 70, 71) niedrigerer Priorität stets akzeptiert wird.

4. Funkkommunikationsnetzwerk nach einem der Ansprüche 1 bis 3,
**dadurch gekennzeichnet,**
**dass** die Basisstationen (11, 12, 15, 16, 70, 71) so eingerichtet sind, dass sie ihre Vorschläge (60, 62, 64, 66, 68) der Zuweisung der Zeitschlitze (20) zu Sendeschlitzen (21, 23, 25, 27, 29, 31, 32, 34, 35, 37, 38, 40, 44, 48, 102, 103) und Empfangsschlitzen (22, 24, 26, 28, 30, 33, 36, 39, 41, 42, 43, 45, 46, 47, 49, 50, 100, 101) von einem jeweiligen Nachrichtenübertragungsbedarf abhängig bestimmen.

5. Funkkommunikationsnetzwerk nach einem der Ansprüche 1 bis 4,
**dadurch gekennzeichnet,**
**dass** die Basisstationen (11, 12, 15, 16, 70, 71) zur Kommunikation miteinander über eine Funkverbindung (17) und/oder eine Verbindungsleitung (18) miteinander verbunden sind.

6. Funkkommunikationsnetzwerk nach einem der Ansprüche 1 bis 5,
**dadurch gekennzeichnet,**
**dass** die Basisstationen (11, 12, 15, 16, 70, 71) so eingerichtet sind, dass sie Synchronisationsinformationen austauschen, und
**dass** die Basisstationen (11, 12, 15, 16, 70, 71) die Sendeschlitze (21, 23, 25, 27, 29, 31, 32, 34, 35, 37, 38, 40, 44, 48, 102, 103) und Empfangsschlitze (22, 24, 26, 28, 30, 33, 36, 39, 41, 42, 43, 45, 46, 47, 49, 50, 100, 101) synchronisieren.

7. Funkkommunikationsnetzwerk nach einem der Ansprüche 1 bis 6,
**dadurch gekennzeichnet,**
**dass** durch die Basisstationen (11, 12, 15, 16, 70, 71) die Zeitschlitze (20) derart Sendeschlitzen (21, 23, 25, 27, 29, 31, 32, 34, 35, 37, 38, 40, 44, 48, 102, 103) und Empfangsschlitzen (22, 24, 26, 28, 30, 33, 36, 39, 41, 42, 43, 45, 46, 47, 49, 50, 100, 101) zuweisbar sind, dass die Anzahl nicht zur Übertragung von Nachrichten genutzter Zeitschlitze (20) minimiert ist.

8. Funkkommunikationsnetzwerk nach einem der Ansprüche 1 bis 7,
**dadurch gekennzeichnet,**
**dass** die Basisstationen (11, 12, 15, 16, 70, 71) so eingerichtet sind, dass sie nach einer Aktivierung einer weiteren Basisstation (11, 12, 15, 16, 70, 71) gemeinsam mit der weiteren Basisstation (11, 12, 15, 16, 70, 71) eine Zuweisung der Zeitschlitze (20) zu Sendeschlitzen (21, 23, 25, 27, 29, 31, 32, 34, 35, 37, 38, 40, 44, 48, 102, 103) und Empfangsschlitzen (22, 24, 26, 28, 30, 33, 36, 39, 41, 42, 43, 45, 46, 47, 49, 50, 100, 101) bestimmen.

9. Verfahren zum Betreiben eines Funkkommunikationsnetzwerks mit zumindest zwei Basisstationen (11, 12, 15, 16, 70, 71),
wobei die Basisstationen (11, 12, 15, 16, 70, 71) in Zeitschlitzen (20) mit Mobilstationen (10) kommunizieren, wobei die Zeitschlitze (20) in Sendeschlitze (21, 23, 25, 27, 29, 31, 32, 34, 35, 37, 38, 40, 44, 48, 102, 103), während welchen die Basisstationen (11, 12, 15, 16, 70, 71) Nachrichten senden und Empfangsschlitze (22, 24, 26, 28, 30, 33, 36, 39, 41, 42, 43, 45, 46, 47, 49, 50, 100, 101), während welchen die Basisstationen (11, 12, 15, 16, 70, 71) Nachrichten empfangen, aufgeteilt sind,
wobei eine Zuweisung der Zeitschlitze (20) zu Sendeschlitzen (21, 23, 25, 27, 29, 31, 32, 34, 35, 37, 38, 40, 44, 48, 102, 103) und Empfangsschlitzen (22, 24, 26, 28, 30, 33, 36, 39, 41, 42, 43, 45, 46, 47, 49, 50, 100, 101) durch die Basisstationen (11, 12, 15, 16, 70, 71) gemeinsam bestimmt werden,
**dadurch gekennzeichnet,**
**dass** ein Vorschlag (60, 62, 64, 66, 68) der Zuweisung der Zeitschlitze (20) zu Sendeschlitzen (21, 23, 25, 27, 29, 31, 32, 34, 35, 37, 38, 40, 44, 48, 102, 103) und Empfangsschlitzen (22, 24, 26, 28, 30, 33, 36, 39, 41, 42, 43, 45, 46, 47, 49, 50, 100, 101) von einer ersten Basisstation (11, 12, 15, 16, 70, 71) an eine zweiten Basisstation (11, 12, 15, 16, 70, 71) gesendet wird, und dass, wenn der Vorschlag (60, 62, 64, 66, 68) von der zweiten Basisstation (11, 12, 15, 16, 70, 71) akzeptiert wird, eine Bestätigung (61, 65, 69) von der zweiten Basisstation (11, 12, 15, 16, 70, 71) an die erste Basisstation (11, 12, 15, 16, 70, 71) gesendet wird, oder wenn der Vorschlag (60, 62, 64, 66, 68) von der zweiten Basisstation (11, 12, 15, 16, 70, 71) abgelehnt wird, eine Ablehnung (63, 68) von der zweiten Basisstation (11, 12, 15, 16, 70, 71) an die erste Basisstation (11, 12, 15, 16, 70, 71) gesendet wird.

10. Verfahren nach Anspruch 9,
**dadurch gekennzeichnet,**
**dass** von der zweiten Basisstation (11, 12, 15, 16, 70, 71) ein zweiter Vorschlag (64, 68) der Zuweisung der Zeitschlitze (20) zu Sendeschlitzen (21, 23, 25, 27, 29, 31, 32, 34, 35, 37, 38, 40, 44, 48, 102, 103) und Empfangsschlitzen (22, 24, 26, 28, 30, 33, 36, 39, 41, 42, 43, 45, 46, 47, 49, 50, 100, 101) an die erste Basisstation (11, 12, 15, 16, 70, 71) gesendet wird.

11. Verfahren nach einem der Ansprüche 9 oder 11,
**dadurch gekennzeichnet,**
**dass** zumindest eine Basisstation (11, 12, 15, 16, 70, 71) über eine höhere Priorität verfügt als zumindest eine andere Basisstation (11, 12, 15, 16, 70, 71), und
**dass** ein Vorschlag (60, 62, 64, 66, 68) der Zuweisung der Zeitschlitze (20) zu Sendeschlitzen (21, 23, 25, 27, 29, 31, 32, 34, 35, 37, 38, 40, 44, 48, 102, 103) und Empfangsschlitzen (22, 24, 26, 28, 30, 33, 36, 39, 41, 42, 43, 45, 46, 47, 49, 50, 100, 101) durch die Basisstation (11, 12, 15, 16, 70, 71) höherer Priorität von der Basisstation (11, 12, 15, 16, 70, 71) niedrigerer Priorität stets akzeptiert wird.

12. Verfahren nach einem der Ansprüche 9 bis 11,
**dadurch gekennzeichnet,**
**dass** die Vorschläge (60, 62, 64, 66, 68) der Zuweisung der Zeitschlitze (20) zu Sendeschlitzen (21, 23, 25, 27, 29, 31, 32, 34, 35, 37, 38, 40, 44, 48, 102, 103) und Empfangsschlitzen (22, 24, 26, 28, 30, 33, 36, 39, 41, 42, 43, 45, 46, 47, 49, 50, 100, 101) von den Basisstationen (11, 12, 15, 16, 70, 71) von einem jeweiligen Nachrichtenübertragungsbedarf abhängig bestimmt werden.

13. Verfahren nach einem der Ansprüche 9 bis 12,
**dadurch gekennzeichnet,**
**dass** die Basisstationen (11, 12, 15, 16, 70, 71) über eine Funkverbindung (17) und/oder eine Verbindungsleitung (18) kommunizieren, über die sie miteinander verbunden sind.

14. Verfahren nach einem der Ansprüche 9 bis 13,
**dadurch gekennzeichnet,**
**dass** Synchronisationsinformationen von den Basisstationen (11, 12, 15, 16, 70, 71) ausgetauscht werden, und
**dass** die Sendeschlitze (21, 23, 25, 27, 29, 31, 32, 34, 35, 37, 38, 40, 44, 48, 102, 103) und Empfangsschlitze (22, 24, 26, 28, 30, 33, 36, 39, 41, 42, 43, 45, 46, 47, 49, 50, 100, 101) von den Basisstationen (11, 12, 15, 16, 70, 71) synchronisiert werden.

15. Verfahren nach einem der Ansprüche 9 bis 14,
**dadurch gekennzeichnet,**
**dass** die Zeitschlitze (20) von den Basisstationen (11, 12, 15, 16, 70, 71) derart Sendeschlitzen (21, 23, 25, 27, 29, 31, 32, 34, 35, 37, 38, 40, 44, 48, 102, 103) und Empfangsschlitzen (22, 24, 26, 28, 30, 33, 36, 39, 41, 42, 43, 45, 46, 47, 49, 50, 100, 101) zugewiesen werden, dass die Anzahl nicht zu einer Übertragung von Nachrichten genutzter Zeitschlitze (20) minimiert wird.

16. Verfahren nach einem der Ansprüche 9 bis 15,
**dadurch gekennzeichnet,**
**dass** eine Zuweisung der Zeitschlitze (20) zu Sendeschlitzen (21, 23, 25, 27, 29, 31, 32, 34, 35, 37, 38, 40, 44, 48, 102, 103) und Empfangsschlitzen (22, 24, 26, 28, 30, 33, 36, 39, 41, 42, 43, 45, 46, 47, 49, 50, 100, 101) nach einer Aktivierung einer weiteren Basisstation (11, 12, 15, 16, 70, 71) gemeinsam von den Basisstationen (11, 12, 15, 16, 70, 71) und der weiteren Basisstation (11, 12, 15, 16, 70, 71) bestimmt werden.

## Claims

1. Radio communications network having at least two base stations (11, 12, 15, 16, 70, 71), the base stations (11, 12, 15, 16, 70, 71) communicating in time slots (20) with mobile stations (10), wherein the time slots (20) are divided into transmission slots (21, 23, 25, 27, 29, 31, 32, 34, 35, 37, 38, 40, 44, 48, 102, 103), during which the base stations (11, 12, 15, 16, 70, 71) send messages and receiving slots (22, 24, 26, 28, 30, 33, 36, 39, 41, 42, 43, 45, 46, 47, 49, 50, 100, 101), during which the base stations (11 12, 15, 16, 70, 71) receive messages, the base stations (11, 12, 15, 16, 70, 71) being arranged so that they jointly determine an allocation of the time slots (20) to transmission slots (21, 23, 25, 27, 29, 31, 32, 34, 35, 37, 38, 40, 44, 48, 102, 103) and receiving slots (22, 24, 26, 28, 30, 33, 36, 39, 41, 42, 43, 45, 46, 47, 49, 50, 100, 101), **characterised in that** a first base station (11, 12, 15, 16, 70, 71) is arranged so that it sends a second base station (11, 12, 15, 16, 70, 71) a proposal (60, 62, 64, 66, 68) for the allocation of the time slots (20) to transmission slots (21, 23, 25, 27, 29, 31, 32, 34, 35, 37, 38, 40, 44, 48, 102, 103) and receiving slots (22, 24, 26, 28, 30, 33, 36, 39, 41, 42, 43, 45, 46, 47, 49, 50, 100, 101), and **in that** the second base station (11, 12, 15, 16, 70, 71) is arranged so that, if it accepts the proposal (60, 62, 64, 66, 68) it sends a confirmation (61, 65, 69) to the first base station (11, 12, 15, 16, 70, 71), or if it declines the proposal (60, 62, 64, 66, 68) it sends a refusal (63, 67) to the first base station (11, 12, 15, 16, 70, 71).

2. Radio communications network according to claim 1, **characterised in that** the second base station (11, 12, 15, 16, 70, 71) is arranged so that it sends the first base station (11, 12, 15, 16, 70, 71) a second proposal (64, 68) for allocating the time slots (20) to transmission slots (21, 23, 25, 27, 29, 31, 32, 34, 35, 37, 38, 40, 44, 48, 102, 103) and receiving slots (22, 24, 26, 28, 30, 33, 36, 39, 41, 42, 43, 45, 46, 47, 49, 50, 100, 101).

3. Radio communications network according to one of claims 1 or 2, **characterised in that** at least one base station (11, 12, 15, 16, 70, 71) has a higher priority than at least one other base station (11, 12, 15, 16, 70, 71), and **in that** the lower-priority base station is arranged so that a proposal (60, 62, 64, 66, 68) for the allocation of the time slots (20) to transmission slots (21, 23, 25, 27, 29, 31, 32, 34, 35, 37, 38, 40, 44, 48, 102, 103) and receiving slots (22, 24, 26, 28, 30, 33, 36, 39, 41, 42, 43, 45, 46, 47, 49, 50, 100, 101) by the higher-priority base station (11, 12, 15, 16, 70, 71) is always accepted by the lower-priority base station (11, 12, 15, 16, 70, 71).

4. Radio communications network according to one of claims 1 to 3, **characterised in that** the base stations (11, 12, 15, 16, 70, 71) are arranged so that they determine their proposals (60, 62, 64, 66, 68) for the allocation of the time slots (20) to transmission slots (21, 23, 25, 27, 29, 31, 32, 34, 35, 37, 38, 40, 44, 48, 102, 103) and receiving slots (22, 24, 26, 28, 30, 33, 36, 39, 41, 42, 43, 45, 46, 47, 49, 50, 100, 101) as a function of a respective requirement for the transmission of a message.

5. Radio communications network according to one of claims 1 to 4, **characterised in that** the base stations (11, 12, 15, 16, 70, 71) are connected to another for communication with one another via a radio link (17) and/or a connecting line (18).

6. Radio communications network according to one of claims 1 to 5, **characterised in that** the base stations (11, 12, 15, 16, 70, 71) are arranged so that they exchange synchronisation information, and **in that** the base stations (11, 12, 15, 16, 70, 71) synchronise the transmission slots (21, 23, 25, 27, 29, 31, 32, 34, 35, 37, 38, 40, 44, 48, 102, 103) and receiving slots (22, 24, 26, 28, 30, 33, 36, 39, 41, 42, 43, 45, 46, 47, 49, 50, 100, 101).

7. Radio communications network according to one of claims 1 to 6, **characterised in that** the time slots (20) can be allocated to transmission slots (21, 23, 25, 27, 29, 31, 32, 34, 35, 37, 38, 40, 44, 48, 102, 103) and receiving slots (22, 24, 26, 28, 30, 33, 36, 39, 41, 42, 43, 45, 46, 47, 49, 50, 100, 101) by the base stations (11, 12, 15, 16, 70, 71) such that the number of time slots (20) not used for sending messages is minimised.

8. Radio communications network according to one of claims 1 to 7, **characterised in that** the base stations (11, 12, 15, 16, 70, 71) are arranged so that, after activation of an additional base station (11, 12, 15, 16, 70, 71), they determine jointly with the additional base station (11, 12, 15, 16, 70, 71) an allocation of the time slots (20) to transmission slots (21, 23, 25, 27, 29, 31, 32, 34, 35, 37, 38, 40, 44, 48, 102, 103) and receiving slots (22, 24, 26, 28, 30, 33, 36, 39, 41, 42, 43, 45, 46, 47, 49, 50, 100, 101).

9. Method of operating a radio communications network having at least two base stations (11, 12, 15, 16, 70, 71), the base stations (11, 12, 15, 16, 70, 71) communicating in time slots (20) with mobile stations (10), the time slots (20) being divided into transmission slots (21, 23, 25, 27, 29, 31, 32, 34, 35, 37, 38, 40, 44, 48, 102, 103), during which the base stations (11, 12, 15, 16, 70, 71) send messages and receiving slots (22, 24, 26, 28, 30, 33, 36, 39, 41, 42, 43, 45, 46, 47, 49, 50, 100, 101), during which the base stations (11 12, 15, 16, 70, 71) receive messages, the base stations (11, 12, 15, 16, 70, 71) being arranged so that they jointly determine an allocation of the time slots (20) to transmission slots (21, 23, 25, 27, 29, 31, 32, 34, 35, 37, 38, 40, 44, 48, 102, 103) and receiving slots (22, 24, 26, 28, 30, 33, 36, 39, 41, 42, 43, 45, 46, 47, 49, 50, 100, 101), **characterised in that** a first base station (11, 12, 15, 16, 70, 71) is arranged so that it sends a second base station (11, 12, 15, 16, 70, 71) a proposal (60, 62, 64, 66, 68) for the allocation of the time slots (20) to transmission slots (21, 23, 25, 27, 29, 31, 32, 34, 35, 37, 38, 40, 44, 48, 102, 103) and receiving slots (22, 24, 26, 28, 30, 33, 36, 39, 41, 42, 43, 45, 46, 47, 49, 50, 100, 101), and **in that** the second base station (11, 12, 15, 16, 70, 71) is arranged so that, if it accepts the proposal (60, 62, 64, 66, 68) it sends a confirmation (61, 65, 69) to the first base station (11, 12, 15, 16, 70, 71), or if it declines the proposal (60, 62, 64, 66, 68) it sends a refusal (63, 67) to the first base station (11, 12, 15, 16, 70, 71).

10. Method according to claim 9, **characterised in that** the second base station (11, 12, 15, 16, 70, 71) sends the first base station (11, 12, 15, 16, 70, 71) a second proposal (64, 68) for allocating the time slots (20) to transmission slots (21, 23, 25, 27, 29, 31, 32, 34, 35, 37, 38, 40, 44, 48, 102, 103) and receiving slots (22, 24, 26, 28, 30, 33, 36, 39, 41, 42, 43, 45, 46, 47, 49, 50, 100, 101).

11. Method according to one of claims 9 or 11, **characterised in that** at least one base station (11, 12, 15, 16, 70, 71) has a higher priority than at least one other base station (11, 12, 15, 16, 70, 71), and **in that** a proposal (60, 62, 64, 66, 68) for the allocation of the time slots (20) to transmission slots (21, 23, 25, 27, 29, 31, 32, 34, 35, 37, 38, 40, 44, 48, 102, 103) and receiving slots (22, 24, 26, 28, 30, 33, 36, 39, 41, 42, 43, 45, 46, 47, 49, 50, 100, 101) by the higher-priority base station (11, 12, 15, 16, 70, 71) is always accepted by the lower-priority base station (11, 12, 15, 16, 70, 71).

12. Method according to one of claims 9 to 11, **characterised in that** the proposals (60, 62, 64, 66, 68) for the allocation of the time slots (20) to transmission slots (21, 23, 25, 27, 29, 31, 32, 34, 35, 37, 38, 40, 44, 48, 102, 103) and receiving slots (22, 24, 26, 28, 30, 33, 36, 39, 41, 42, 43, 45, 46, 47, 49, 50, 100, 101) from the base stations (11, 12, 15, 16, 70, 71) are determined as a function of a respective message transmission requirement.

13. Method according to one of claims 9 to 12, **characterised in that** the base stations (11, 12, 15, 16, 70, 71) communicate via a radio link (17) and/or a connecting line (18), by which they are connected to one another.

14. Method according to one of claims 9 to 13, **characterised in that** synchronisation information is exchanged by the base stations (11, 12, 15, 16, 70, 71), and **in that** the transmission slots (21, 23, 25, 27, 29, 31, 32, 34, 35, 37, 38, 40, 44, 48, 102, 103) and receiving slots (22, 24, 26, 28, 30, 33, 36, 39, 41, 42, 43, 45, 46, 47, 49, 50, 100, 101) are synchronised by the base stations (11, 12, 15, 16, 70, 71).

15. Method according to one of claims 9 to 14, **characterised in that** the time slots (20) are allocated by the base stations (11, 12, 15, 16, 70, 71) to transmission slots (21, 23, 25, 27, 29, 31, 32, 34, 35, 37, 38, 40, 44, 48, 102, 103) and receiving slots (22, 24, 26, 28, 30, 33, 36, 39, 41, 42, 43, 45, 46, 47, 49, 50, 100, 101) such that the number of time slots (20) not used for sending messages is minimised.

16. Radio communications network according to one of claims 9 to 15, **characterised in that** an allocation of the time slots (20) to transmission slots (21, 23, 25, 27, 29, 31, 32, 34, 35, 37, 38, 40, 44, 48, 102, 103) and receiving slots (22, 24, 26, 28, 30, 33, 36, 39, 41, 42, 43, 45, 46, 47, 49, 50, 100, 101) after activation of an additional base station (11, 12, 15, 16, 70, 71) are determined jointly by the base stations (11, 12, 15, 16, 70, 71) and the additional base station (11, 12, 15, 16,70,71).

## Revendications

1. Réseau de radiocommunication comprenant au moins deux stations de base (11, 12, 15, 16, 70, 71),
les stations de base (11, 12, 15, 16, 70, 71) communiquant dans des créneaux temporels (20) avec des stations mobiles (10), les créneaux temporels (20) étant divisés en créneaux d'émission (21, 23, 25, 27, 29, 31, 32, 34, 35, 37, 38, 40, 44, 48, 102, 103), pendant lesquels les stations de base (11, 12, 15, 16, 70, 71) envoient des messages et créneaux de réception (22, 24, 26, 28, 30, 33, 36, 39, 41, 42, 43, 45, 46, 47, 49, 50, 100, 101), pendant lesquels les stations de base (11, 12, 15, 16, 70, 71) reçoivent des messages, les stations de base (11, 12, 15, 16, 70, 71) étant équipées de telle sorte qu'elles déterminent ensemble une attribution des créneaux temporels (20) à des créneaux d'émission (21, 23, 25, 27, 29, 31, 32, 34, 35, 37, 38, 40, 44, 48, 102, 103) et à des créneaux de réception (22, 24, 26, 28, 30, 33, 36, 39, 41, 42, 43, 45, 46, 47, 49, 50, 100, 101)
**caractérisé en ce**
**qu'**une première station de base (11, 12, 15, 16, 70, 71) est équipée de telle sorte qu'elle envoie à une seconde station de base (11, 12, 15, 16, 70, 71) une proposition (60, 62, 64, 66, 68) d'attribution des créneaux temporels (20) à des créneaux d'émission (21, 23, 25, 27, 29, 31, 32, 34, 35, 37, 38, 40, 44, 48, 102, 103) et àdes créneaux de réception (22, 24, 26, 28, 30, 33, 36, 39, 41, 42, 43, 45, 46, 47, 49, 50, 100, 101), et en ce que la seconde station de base (11, 12, 15, 16, 70, 71) est équipée de telle sorte que, lorsqu'elle accepte la proposition (60, 62, 64, 66, 68), elle envoie une confirmation (61, 65, 69) à la première station de base (11, 12, 15, 16, 70, 71), ou lorsqu'elle refuse la proposition (60, 62, 64, 66, 68), elle envoie un refus (63, 67) à la première station de base (11, 12, 15, 16, 70, 71).

2. Réseau de radiocommunication selon la revendication 1,
**caractérisé en ce que**
la seconde station de base (11, 12, 15, 16, 70, 71) est équipée de telle sorte qu'elle envoie à la première station de base (11, 12, 15, 16, 70, 71) une seconde proposition (64, 68) d'attribution des créneaux temporels (20) à des créneaux d'émission (21, 23, 25, 27, 29, 31, 32, 34, 35, 37, 38, 40, 44, 48, 102, 103) et à des créneaux de réception (22, 24, 26, 28, 30, 33, 36, 39, 41, 42, 43, 45, 46, 47, 49, 50, 100, 101).

3. Réseau de radiocommunication selon l'une des revendications 1 ou 2,
**caractérisé en ce qu'**au moins une station de base (11, 12, 15, 16, 70, 71) présente une priorité plus élevée qu'au moins une autre station de base (11, 12, 15, 16, 70, 71) et
**en ce que** la station de base de faible priorité est équipée de telle sorte qu'une proposition (60, 62, 64, 66, 68) d'attribution des créneaux temporels (20) à des créneaux d'émission ((21, 23, 25, 27, 29, 31, 32, 34, 35, 37, 38, 40, 44, 48, 102, 103) et à des créneaux de réception (22, 24, 26, 28, 30, 33, 36, 39, 41, 42, 43, 45, 46, 47, 49, 50, 100, 101) faite par la station de base (11, 12, 15, 16, 70, 71) de priorité supérieure est toujours acceptée par la station de base (11, 12, 15, 16, 70, 71) de plus faible priorité.

4. Réseau de radiocommunication selon l'une des revendications 1 à 3,
**caractérisé en ce que**
les stations de base (11, 12, 15, 16, 70, 71) sont équipées de telle sorte qu'elles déterminent leurs propositions (60, 62, 64, 66, 68) d'attribution des créneaux temporels (20) à des créneaux d'émission (21, 23, 25, 27, 29, 31, 32, 34, 35, 37, 38, 40, 44, 48, 102, 103) et à des créneaux de réception (22, 24, 26, 28, 30, 33, 36, 39, 41, 42, 43, 45, 46, 47, 49, 50, 100, 101) en fonction d'un besoin respectif de transmission de messages.

5. Réseau de radiocommunication selon l'une des revendications 1 à 4,
**caractérisé en ce que**,
pour la communication les unes avec les autres, les stations de base (11, 12, 15, 16, 70, 71) sont reliées entre elles par une liaison radio (17) et/ou une ligne de raccordement (18).

6. Réseau de radiocommunication selon l'une des revendications 1 à 5,
**caractérisé en ce que**
les stations de base (11, 12, 15, 16, 70, 71) sont équipées de telle sorte qu'elles échangent des informations de synchronisation, et
**en ce que** les stations de base (11, 12, 15, 16, 70, 71) synchronisent les créneaux d'émission (21, 23, 25, 27, 29, 31, 32, 34, 35, 37, 38, 40, 44, 48, 102, 103) et les créneaux de réception (22, 24, 26, 28, 30, 33, 36, 39, 41, 42, 43, 45, 46, 47, 49, 50, 100, 101).

7. Réseau de radiocommunication selon l'une des revendications 1 à 6,
**caractérisé en ce que**
les créneaux temporels (20) peuvent être attribués par les stations de base (11, 12, 15, 16, 70, 71) à des créneaux d'émission (21, 23, 25, 27, 29, 31, 32, 34, 35, 37, 38, 40, 44, 48, 102, 103) et des créneaux de réception (22, 24, 26, 28, 30, 33, 36, 39, 41, 42, 43, 45, 46, 47, 49, 50, 100, 101), de telle sorte que le nombre de créneaux temporels (20) non utilisés pour la transmission de messages est minimisé.

8. Réseau de radiocommunication selon l'une des revendications 1 à 7,
**caractérisé en ce que**
les stations de base (11, 12, 15, 16, 70, 71) sont équipées de telle sorte que, après activation d'une autre station de base (11, 12, 15, 16, 70, 71) conjointement avec l'autre station de base (11, 12, 15, 16, 70, 71), elles déterminent une attribution des créneaux temporels (20) à des créneaux d'émission (21, 23, 25, 27, 29, 31, 32, 34, 35, 37, 38, 40, 44, 48, 102, 103) et à des créneaux de réception (22, 24, 26, 28, 30, 33, 36, 39, 41, 42, 43, 45, 46, 47, 49, 50, 100, 101).

9. Procédé pour le fonctionnement d'un réseau de radiocommunication comprenant au moins deux stations de base (11, 12, 15, 16, 70, 71), les stations de base (11, 12, 15, 16, 70, 71) communiquant dans des créneaux temporels (20) avec des stations mobiles (10), les créneaux temporels (20) étant divisés en créneaux d'émission (21, 23, 25, 27, 29, 31, 32, 34, 35, 37, 38, 40, 44, 48, 102, 103), pendant lesquels les stations de base (11, 12, 15, 16, 70, 71) envoient des messages, et en créneaux de réception (22, 24, 26, 28, 30, 33, 36, 39, 41, 42, 43, 45, 46, 47, 49, 50, 100, 101), pendant lesquels les stations de base (11, 12, 15, 16, 70, 71) reçoivent des messages, une attribution des créneaux temporels (20) à des créneaux d'émission (21, 23, 25, 27, 29, 31, 32, 34, 35, 37, 38, 40, 44, 48, 102, 103) et à des créneaux de réception (22, 24, 26, 28, 30, 33, 36, 39, 41, 42, 43, 45, 46, 47, 49, 50, 100, 101) étant déterminée ensemble par les stations de base (11, 12, 15, 16, 70, 71),
**caractérisé en ce qu'**une proposition (60, 62, 64, 66, 68) d'attribution des créneaux temporels (20) à des créneaux d'émission (21, 23, 25, 27, 29, 31, 32, 34, 35, 37, 38, 40, 44, 48, 102, 103) et à des créneaux de réception (22, 24, 26, 28, 30, 33, 36, 39, 41, 42, 43, 45, 46, 47, 49, 50, 100, 101), est envoyée par une première station de base (11, 12, 15, 16, 70, 71) à une seconde station de base (11, 12, 15, 16, 70, 71), et **en ce que**, lorsque la proposition (60, 62, 64, 66, 68) est acceptée par la seconde station de base (11, 12, 15, 16, 70, 71), une confirmation (61, 65, 69) est envoyée par la seconde station de base (11, 12, 15, 16, 70, 71) à la première station de base (11, 12, 15, 16, 70, 71), ou, lorsque la proposition (60, 62, 64, 66, 68) est refusée par la seconde station de base (11, 12, 15, 16, 70, 71), un refus (63, 68) est envoyé par la seconde station de base (11, 12, 15, 16, 70, 71) à la première station de base (11, 12, 15, 16, 70, 71).

10. Procédé selon la revendication 9,
**caractérisé en ce que**
la seconde station de base (11, 12, 15, 16, 70, 71) envoie à la première station de base (11, 12, 15, 16, 70, 71) une seconde proposition (64, 68) d'attribution des créneaux temporels (20) à des créneaux d'émission (21, 23, 25, 27, 29, 31, 32, 34, 35, 37, 38, 40, 44, 48, 102, 103) et à des créneaux de réception (22, 24, 26, 28, 30, 33, 36, 39, 41, 42, 43, 45, 46, 47, 49, 50, 100, 101).

11. Procédé selon l'une des revendications 9 ou 11,
**caractérisé en ce**
**qu'**au moins une station de base (11, 12, 15, 16, 70, 71) dispose d'une priorité plus élevée qu'au moins une autre station de base (11, 12, 15, 16, 70, 71), et en ce qu'une proposition (60, 62, 64, 66, 68) d'attribution des créneaux temporels (20) à des créneaux d'émission (21, 23, 25, 27, 29, 31, 32, 34, 35, 37, 38, 40, 44, 48, 102, 103) et à des créneaux de réception (22, 24, 26, 28, 30, 33, 36, 39, 41, 42, 43, 45, 46, 47, 49, 50, 100, 101) par la station de base (11, 12, 15, 16, 70, 71) de plus haute priorité est toujours acceptée par la station de base (11, 12, 15, 16, 70, 71) de plus faible priorité.

12. Procédé selon l'une des revendications 9 à 11,
**caractérisé en ce que**
les propositions (60, 62, 64, 66, 68) d'attribution des créneaux temporels (20) à des créneaux d'émission (21, 23, 25, 27, 29, 31, 32, 34, 35, 37, 38, 40, 44, 48, 102, 103) et à des créneaux de réception (22, 24, 26, 28, 30, 33, 36, 39, 41, 42, 43, 45, 46, 47, 49, 50, 100, 101) sont déterminées par les stations de base (11, 12, 15, 16, 70, 71) en fonction d'un besoin respectif de transmission de messages.

13. Procédé selon l'une des revendications 9 à 12,
**caractérisé en ce que**
les stations de base (11, 12, 15, 16, 70, 71) communiquent par une liaison radio (17) et/ou une ligne de raccordement (18) par laquelle elles sont reliées les unes aux autres.

14. Procédé selon l'une des revendications 9 à 13,
**caractérisé en ce que**
des informations de synchronisation sont échangées par les stations de base (11, 12, 15, 16, 70, 71), et
**en ce que** les créneaux d'émission (21, 23, 25, 27, 29, 31, 32, 34, 35, 37, 38, 40, 44, 48, 102, 103) et les créneaux de réception (22, 24, 26, 28, 30, 33, 36, 39, 41, 42, 43, 45, 46, 47, 49, 50, 100, 101) sont synchronisés par les stations de base (11, 12, 15, 16, 70, 71).

15. Procédé selon l'une des revendications 9 à 14,
**caractérisé en ce que**
les créneaux temporels (20) sont attribués par les stations de base (11, 12, 15, 16, 70, 71) à des créneaux d'émission (21, 23, 25, 27, 29, 31, 32, 34, 35, 37, 38, 40, 44, 48, 102, 103) et à des créneaux de réception (22, 24, 26, 28, 30, 33, 36, 39, 41, 42, 43, 45, 46, 47, 49, 50, 100, 101) de telle sorte que le nombre de créneaux temporels (20) non utilisés pour une transmission de messages est minimisé.

16. Procédé selon l'une des revendications 9 à 15,
**caractérisé en ce**
**qu'**une attribution des créneaux temporels (20) à des créneaux d'émission (21, 23, 25, 27, 29, 31, 32, 34, 35, 37, 38, 40, 44, 48, 102, 103) et à des créneaux de réception (22, 24, 26, 28, 30, 33, 36, 39, 41, 42, 43, 45, 46, 47, 49, 50, 100, 101) est déterminée après une activation d'une autre station de base (11, 12, 15, 16, 70, 71) conjointement par les stations de base (11, 12, 15, 16, 70, 71) et l'autre station de base (11, 12, 15, 16, 70, 71).
